# EUROPEAN PATENT APPLICATION

(11) **EP 4 715 000 A1**
(43) Date of publication of application: **25.03.2026**
(21) Application number: 25161786.6
(22) Date of filing: 05.03.2025
(51) Int. Cl.: C08J 3/075, B01J 20/26, C08F 2/44, C08F 220/06, C08J 3/24, C08K 5/13

(54) **SUPERABSORBENT POLYMER, METHOD OF MAKING THE SAME, AND A FOODSTUFF PACKAGING MATERIAL INCLUDING THE SAME**

(30) Priority: 24.09.2024 TW 113136134
(71) Applicant: Formosa Plastics Corporation, Kaohsiung City (TW)
(72) Inventor: CHEN, Zhong-Yi, Kaohsiung City (TW); LAI, Tai-Hong, Kaohsiung City (TW)
(74) Representative: Lang, Christian

(57) **Abstract**

The present invention is related to a superabsorbent polymer, a method of manufacturing the same, and a foodstuff packaging material including the same. By adding a gallic acid group-containing polyphenol compound into a reaction composition, the level of polymerization and the stability of a carboxyl group-containing monomer in the polymerization can be increased, thereby decreasing amounts of low-molecular-weight extractives in the obtained superabsorbent polymer. The superabsorbent polymer not only can be safe and have an antibacterial property but also maintain excellent retention capacity and absorption capacity, and can be used as the foodstuff packaging material.

## Description

### BACKGROUND

### Field of Invention

The present invention relates to a superabsorbent polymer. More particularly, the present invention relates to a superabsorbent polymer obtained by adding a gallic acid group-containing polyphenol compound, a method of making the same, and a foodstuff packaging material including the same.

### Description of Related Art

Commercial foods, especially fresh foods, are often packed with foodstuff packaging materials to reach the effects of airtight, waterproof, and anti-odor. Fresh foods have high moisture content. For example, the moisture content (including tissue fluid) of fresh meat can be as high as 10 weight percent, allowing the growth of microbes in a favorable environment of the packaging meat, thereby adversely affecting food storage. The aforementioned problem is conventionally solved by using multi-layer cellulose as a water absorbent to absorb water leaked from the foods. However, the multi-layer cellulose has limited retention capacity and absorption capacity, so the moisture leaked from the foods cannot escape. The moisture not only condenses into water drops inside the foodstuff packaging material, which in turn decreases purchase intentions but also causes the growth of the microbes.

A superabsorbent polymer can absorb water that is 10 times to 100 times and even 1000 times its original mass and can be widely used in various industries. Besides being applied in personal hygiene products (e.g., baby diapers, sanitary products, disposable wipes, etc.), the superabsorbent polymer can also be applied as a water-retaining agent in agriculture or horticulture, an anti-dew condensation agent in building material, a water remover in the oil industry, as well as a waterproof covering agent in the cable manufacturing industry. The superabsorbent polymer also has the potential to be used as a foodstuff packaging material. However, the superabsorbent polymer is made by polymerization during which the low-molecular-weight extractives are produced easily. When the superabsorbent polymer attaches to the foods, the low-molecular-weight extractives may migrate and contaminate the foods, thereby raising other safety concerns.

China patent publication No. CN 110820069A discloses a bacteriostatic absorbent pad in which citric acid is used to enhance the hydrophobicity and the absorption capacity of polyvinyl alcohol nanofibers, and the clove oil is embedded in the polyvinyl alcohol nanofibers by electrospinning technique, so that the bacteriostatic absorbent pad made by such polyvinyl alcohol nanofibers has an antibacterial property. However, the absorption capacity of the bacteriostatic absorbent pad cannot meet the needs. Moreover, the polyvinyl alcohol nanofibers are a polymer, and the low-molecular-weight extractives that may migrate into foods can be produced during the polymerization. Thus, the bacteriostatic absorbent pad obtained by using the polyvinyl alcohol nanofibers may raise safety concerns.

China patent publication No. CN114097866A discloses an absorbent pad including a complex membrane of ginger oil and a superabsorbent polymer. U.S. Pat. No. US 7595428B discloses a water-absorbing agent composition including a plant cellulose powder and a superabsorbent polymer. China Pat. No. CN 201980578U discloses an absorbent pad whose main material is an absorber of a superabsorbent polymer. Although the superabsorbent polymer provides excellent absorption capacity, the use of the superabsorbent polymer as an absorbent pad or an absorber may raise safety concerns since the superabsorbent polymer is a polymer. The low-molecular-weight extractives that may migrate into foods may be produced during the polymerization of the polymer.

U.S. Pat. No. US 6350710B discloses an absorbent insert used for foodstuff packaging. The absorbent insert includes a top part, a bottom part, and a core including a superabsorbent polymer. The superabsorbent polymer is made by a specific crosslinking agent and has excellent absorption capacity and a low amount of extractable contents. However, it is not proven whether the extractable of the low-molecular-weight extractives of the superabsorbent polymer is less than 1.5%. Therefore, it is not known whether the obtained absorbent insert can comply with the rules related to food safety and thus remains a safety concern.

In view of these, it is necessary to have a superabsorbent polymer having a decreased extractable of the low-molecular-weight extractives, so as to solve the aforementioned problems.

### SUMMARY

### BRIEF DESCRIPTION OF THE DRAWINGS

The invention can be more fully understood by reading the following detailed description of the embodiment, with reference made to the accompanying drawings as follows:

An aspect of the present invention provides a superabsorbent polymer. The superabsorbent polymer includes a polyphenol compound to enhance the level of polymerization and the stability of the carboxyl group-containing monomer in the reaction composition, thereby decreasing the level of the low-molecular-weight extractives in the superabsorbent polymer.

Another aspect of the present invention provides a foodstuff packaging material including the aforementioned superabsorbent polymer. The superabsorbent polymer has low extractables of the low-molecular-weight extractives so that the foodstuff packaging complies with the safety rules related to food safety.

The other aspect of the present invention provides a method of making the superabsorbent polymer. In the method, a polyphenol compound is used to enhance the level of polymerization and the stability of the carboxyl group-containing monomer in the reaction composition, thereby decreasing the level of the low-molecular-weight extractives in the superabsorbent polymer.

According to the aspect of the present invention, a superabsorbent polymer is provided. The superabsorbent polymer includes a carboxyl group-containing monomer water solution, a polyphenol compound, a crosslinking agent, and an initiator. A neutralization ratio of the carboxyl group-containing monomer water solution is 45 mole percent to 80 mole percent, and a concentration of the carboxyl group-containing monomer water solution is 20 weight percent to 55 weight percent. The polyphenol compound has at least one gallic acid group. The initiator includes a redox initiator and/or a thermal decomposition initiator.

According to some embodiments of the present invention, a polyphenol compound has one to six gallic acid groups.

According to some embodiments of the present invention, the polyphenol compound has at least one glycosyl group, in which the at least one glycosyl group has 5 to 6 carbons, and the at least one glycosyl group is covalently bound to one of the gallic acid groups.

According to some embodiments of the present invention, the polyphenol compound has at least one flavone group, and the at least one flavone group is covalently bound to one of the gallic acid groups.

According to some embodiments of the present invention, in which the polyphenol compound includes an ellagic acid.

According to some embodiments of the present invention, the polyphenol compound includes a digallic acid.

According to some embodiments of the present invention, the polyphenol compound includes a hexahydroxydiphenic acid.

According to some embodiments of the present invention, the polyphenol compound is selected from the group consisting of tannic acid, chebulinic acid, punicalagin, epicatechin gallate, hamamelitannin, corilagin, and any combination thereof.

According to another aspect of the present invention, a foodstuff packaging material is provided, in which the foodstuff packaging material includes the aforementioned superabsorbent polymer. According to an evaluation method recited in Code of Federal Regulations Title 21 Part 117 subpart B section 177.1211 regulated by the U.S. Food and Drug Administration (FDA), the extractables of low-molecular-weight extractives in the superabsorbent polymer in 24 hours are less than 1.5%.

According to the other aspect of the present invention, a method of making the superabsorbent polymer is provided. First, a reaction composition is provided, in which the reaction composition includes a carboxyl group-containing monomer water solution, a polyphenol compound, a crosslinking agent, and an initiator.

A neutralization ratio of the carboxyl group-containing monomer water solution is 45 mole percent to 80 mole percent. A concentration of the carboxyl group-containing monomer water solution is 20 weight percent to 55 weight percent. The polyphenol compound has at least one gallic acid group. The initiator includes a redox initiator and/or a thermal decomposition initiator. Then, a polymerization is performed on the reaction composition, thereby obtaining the superabsorbent polymer.

According to some embodiments of the present invention, the polyphenol compound has one to six gallic acid groups. According to some embodiments of the present invention, the polyphenol compound has at least one glycosyl group, the at least one glycosyl group has 5 to 6 carbons, and the at least one glycosyl group is covalently bound to one of the gallic acid groups. According to some embodiments of the present invention, the polyphenol compound has at least one of a flavone group, and the at least one of the flavone group is covalently bound to one of the gallic acid groups. According to some embodiments of the present invention, the polyphenol compound includes an ellagic acid. According to some embodiments of the present invention, the polyphenol compound includes a digallic acid. According to some embodiments of the present invention, the polyphenol compound includes a hexahydroxydiphenic acid. According to some embodiments of the present invention, the polyphenol compound is selected from the group consisting of tannic acid, chebulinic acid, punicalagin, epicatechin gallate, hamamelitannin, corilagin, and any combination thereof.

By applying the superabsorbent polymer, the making method of the same, and the foodstuff packaging material including the same of the present invention, in which the gallic acid group-containing polyphenol compound is added in the reaction composition, so as to enhance the level of polymerization and the stability of the carboxyl group-containing monomer in the reaction composition during the polymerization, thereby reducing the extractables of the low-molecular-weight extractives in the obtained superabsorbent polymer. The superabsorbent polymer can not only be safe and have an antibacterial property but also maintain excellent retention capacity and absorption capacity and thus can be applied as a foodstuff packaging material.

### BRIEF DESCRIPTION OF THE DRAWINGS

The invention can be more fully understood by reading the following detailed description of the embodiment, with reference made to the accompanying drawings as follows:

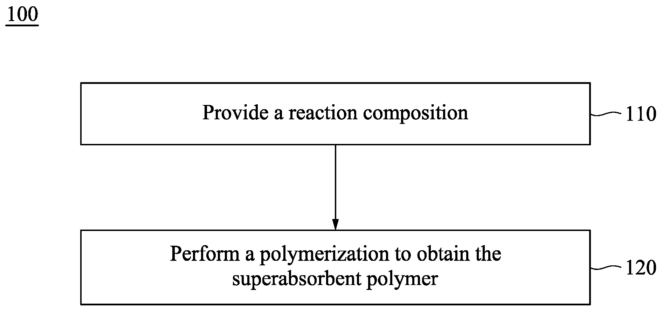

The figure illustrates a part flow chart of method 100 of the superabsorbent polymer according to some embodiments of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

As mentioned above, the present invention provides a superabsorbent polymer, a making method of the same, and a foodstuff packaging material including the same. In the superabsorbent polymer, a gallic acid group-containing polyphenol compound is added in a reaction composition, so as to enhance the level of polymerization and the stability during the polymerization, thereby reducing the level of the low-molecular-weight extractives in the obtained superabsorbent polymer. The superabsorbent polymer can not only be safe and have an antibacterial property but also maintain excellent retention capacity and absorption capacity. Thus, the superabsorbent polymer can be applied as a foodstuff packaging material.

The term "level of polymerization" herein refers to a ratio of the carboxyl group-containing monomer that forms the polymer. In some embodiments, the level of polymerization can be evaluated by residual monomers (RM). In some specific embodiments, when the residual monomers are acrylic acids, the residual monomers are also referred to as residual acrylic acid (RAA) which is the weight ratio of the amount of the carboxyl group-containing monomer not reacted in the reaction composition after being subjected to the polymerization (numerator) over the obtained polymer (denominator). The lower the RAA of the superabsorbent polymer is, the higher the level of polymerization of the superabsorbent polymer is. In some embodiments, an RAA less than 500 ppm represents a high level of polymerization of the superabsorbent polymer.

The term "stability" herein refers to the ability of the carboxyl group-containing monomers to form resonance structures during the polymerization, thereby stabilizing the chemical structures of the carboxyl group-containing monomers. As the chemical structures of the carboxyl group-containing monomers are stabilized, the reaction rate of the polymerization can be reduced, thereby enhancing the level of polymerization of the carboxyl group-containing monomer. Therefore, the extractable contents (especially low-molecular-weight extractives) of the obtained superabsorbent polymer can hardly release. In some embodiments, the stability can be evaluated by the extractable content, for example.

The term "extractable content" refers to the polymer dissolved from a superabsorbent polymer in a specific solution. In some specific embodiments, the specific solution can be a saline of 0.8 weight percent to 1.0 weight percent, for example. The aforementioned extractable content can be obtained by performing extract by soaking the superabsorbent polymer in the aforementioned specific solution. Therefore, the extractable content can also be referred to as extractives.

The term "low-molecular-weight extractives" refers to the polymer with a molecular weight of less than or equal to 1000 g/mol among the extractable contents. The low-molecular-weight extractives can migrate into foods, leading to a safety concern. Therefore, when the superabsorbent polymer is used as a foodstuff packaging material, the level of the low-molecular-weight extractives in the superabsorbent polymer should be reduced. In some embodiments, the level of the low-molecular-weight extractives can be evaluated by extractables and residual levels. The extractables are the weight percent (wt%) of the low-molecular-weight extractives (numerator) over the extractable content (denominator). The residual levels are the weight percent of the low-molecular-weight extractives (numerator) over the superabsorbent polymer (denominator).

The term "be safe" refers to an extremely low amount of contents migrating into the foods as the superabsorbent polymer directly contacts. Whether the superabsorbent polymer is safe can be evaluated by the extractable contents as well as the extractables and the residual levels of the low-molecular-weight extractives. In some embodiments, the superabsorbent polymer is safe when the extractable content of the superabsorbent polymers is less than or equal to 10.0 weight percent, the extractables of the low-molecular-weight extractives are less than or equal to 1.5 weight percent, and/or the residual levels of the low-molecular-weight extractives are less than or equal to 0.15 weight percent.

The term "antibacterial property" herein refers to the property of the superabsorbent polymer to reduce the number of viable microbes after attaching the microbes. In some embodiments, the microbe can include but not limited to bacteria, archaea, fungi, and/or protists. In some embodiments, there is no specificity on the antibacterial property of the superabsorbent polymer. That is, the superabsorbent polymer can reduce the amounts of viable Gram-positive bacteria and viable Gram-negative bacteria. In the aforementioned embodiment, the Gram-positive bacteria can be *Staphylococcus aureus,* for example, and the Gram-negative bacteria can be *Escherichia coli,* for example.

The term "retention capacity" herein refers to the ability of the superabsorbent polymer to absorb liquid while or after sustaining an external force, which simulates the situation in which the foods are deposed on the foodstuff packaging material and exert pressure on the foodstuff packaging material the during the real application. In some embodiments, the retention capacity can be evaluated with absorption against pressure (AAP), which is the ratio value of the weight of the liquid in the superabsorbent polymer (numerator) over the weight of the superabsorbent polymer not absorbing liquid (i.e., dry weight, as the denominator herein) after the superabsorbent polymer sustains a certain pressure while absorbing the liquid for a certain time. In some embodiments, the superabsorbent polymer has an excellent retention capacity when the superabsorbent polymer has an AAP more than or equal to 20 g/g, e.g., 20 g/g to 30 g/g.

The term "absorption capacity" herein refers to the ability of the superabsorbent polymer to absorb liquid. In some embodiments, the liquid can include but not limited to pure water, saline, urine, menstrual blood, soil water, or other water solutions applied in the environment. In some embodiments, the absorption capacity can be evaluated by absorption rate (also referred to as free swell capacity, FSC). FSC is the ratio of the maximum weight of the liquid in the superabsorbent polymer (numerator) over the weight of the superabsorbent polymer not absorbing the liquid (i.e., dry weight, as the denominator herein) after the superabsorbent polymer soaks in saline for a time length without external force. In some specific embodiments, the FSC of the superabsorbent polymer that is more than or equal to 50 g/g, i.e., 55 g/g to 80 g/g, or 60 g/g to 70 g/g represents an excellent retention capacity of the superabsorbent polymer.

Reference is made to the figure for the method of making the superabsorbent polymer. The figure illustrates a part flow chart of method 100 of the superabsorbent polymer according to some embodiments of the present invention. As mentioned in Operation 110 of the figure, a reaction composition is provided. The reaction composition can include but not limited to a carboxyl group-containing monomer water solution, a polyphenol compound, a crosslinking agent, and an initiator. The aforementioned carboxyl group-containing monomer water solution can include but not limited to carboxyl group-containing monomers and water, in which the carboxyl group-containing monomers can include but not limited to an acrylic acid compound. In some specific embodiments, the acrylic acid composition can include but not limited to acrylic acid and/or methacrylic acid.

In some embodiments, the carboxyl group-containing monomer can selectively include other water-soluble monomers with carboxyl groups and unsaturated double bonds. For example, the other water-soluble monomers with carboxyl groups and unsaturated double bonds can include but not limited to maleic acid, fumaric acid, other appropriate water-soluble monomers, or any combination of the aforementioned monomers. There is no special limitation on the adding amount of the aforementioned water-soluble monomers with carboxyl groups and unsaturated double bonds as long as the physical properties of the superabsorbent polymer are not adversely affected. The aforementioned water-soluble monomers can be used solely or as a mixture of more.

In the other embodiment, other hydrophilic monomers having unsaturated double bonds can be added to the carboxyl group-containing monomer water solution depending on the situation and the requirement. For example, other hydrophilic monomers having unsaturated double bonds can include but not limited to 2-propenyla-mine-2-methylpropanesulfonic acid, maleic anhydride, fumaric anhydride, acrylamide, methacrylamide, 2-carboxyethyl acrylate, 2-carboxy ethyl methacrylate, methyl acrylate, ethyl acrylate, N-dimethyl acrylamide, N-trimethyl acrylamide ammonium chloride, other proper hydrophilic monomers, or any other combination of monomers. There is no limitation on the adding amount of the aforementioned hydrophilic monomers having unsaturated double bonds as long as the physical properties of the superabsorbent polymer are not adversely affected. The aforementioned hydrophilic monomers can be used solely or as a mixture of more.

In the carboxyl group-containing monomer water solution, a concentration of the carboxyl group-containing monomer can be 20 weight percent to 55 weight percent, i.e., 30 weight percent to 45 weight percent, for example. The carboxyl group-containing monomer water solution can be prepared more easily with an amount of the carboxyl group-containing monomer in the aforementioned range, thereby benefiting the control of the reaction heat and reaction rate in the subsequent reaction. Moreover, the superabsorbent polymer can be prepared more easily with the carboxyl group-containing monomer having a concentration in the aforementioned range, and the physical properties of the formed hydrogel (e.g., viscosity and hardness) can be better, thereby benefiting the mechanical process (i.e., pulverizing).

The carboxyl group-containing monomer water solution can selectively include a water-soluble polymer to reduce the cost. In some embodiments, the water-soluble polymer can include but not limited to partially saponified or fully saponified polyvinyl alcohol, polyethylene glycol, polyacrylic acid, polyacrylamide, cellulose, starch, and/or starch derivatives. In some specific embodiments, the cellulose can include but not limited to methylcellulose, methylcellulose acrylate, ethyl cellulose, other proper cellulose, or a combination of the same. In some embodiments, based on the superabsorbent polymer as 100 weight percent, the use amount of the water-soluble polymer can be 0 weight percent to 20 weight percent, e.g., 0 weight percent to 10 weight percent, so as to enhance the physical properties of the superabsorbent polymer.

Before the Operation 110, a neutralizing step can be selectively performed with a basic compound on the carboxyl group-containing monomer water solution, so as to enhance the absorption capacity of the obtained superabsorbent polymer. In some embodiments, a basic compound can include but not limited to an alkali metal compound, other suitable basic compounds, or any mixtures of the aforementioned compounds. In some embodiments, the basic compound can include a basic compound having a hydroxyl group, a compound having a carboxyl group, other suitable basic compounds, or any mixtures of the aforementioned compounds. In some specific embodiments, the basic compound can include but not limited to sodium hydroxide, potassium hydroxide, sodium carbonate, potassium carbonate, sodium bicarbonate, and/or potassium bicarbonate. After the neutralizing step, the partial carboxyl groups of the carboxyl group-containing monomer water solution can form sodium salts or potassium salts.

Based on the amount of the carboxyl group in the carboxyl group-containing monomer water solution before the neutralizing step as 100 mole percent, the neutralization ratio of the carboxyl group-containing monomer water solution (i.e., the amount of the carboxyl group being neutralized in the carboxyl group-containing monomer water solution) can be more than or equal to 45 mole percent, e.g., 45 mole percent to 85 mole percent, or 60 mole percent to 80 mole percent, for example. That is, the higher the neutralization ratio of the carboxyl group-containing monomer water solution is, the less carboxyl group the carboxyl group-containing monomer water solution has. If the neutralization ratio of the carboxyl group-containing monomer water solution is less than 45 mole percent, the obtained superabsorbent polymer has a worse absorption capacity, a worse retention capacity, and a lower pH. In some embodiments, if the neutralization ratio of the carboxyl group-containing monomer water solution is in the aforementioned range, the obtained superabsorbent polymer has a proper pH, a better retention capacity, a better absorption capacity, and a better antibacterial property.

In some embodiments, the pH of the carboxyl group-containing monomer water solution can be 7.0, or 5.0 to 6.5, or else 5.0 to 6.0, for example. If the pH of the carboxyl group-containing monomer water solution is more than or equal to 7.0, the retention capacity and the absorption capacity of the obtained superabsorbent polymer reduce dramatically. In some embodiments, if the pH of the carboxyl group-containing monomer water solution is 5.0 to 6.0, the obtained superabsorbent polymer has better retention capacity and absorption capacity.

The aforementioned polyphenol compound has at least one gallic acid group, in which the gallic acid group has three hydroxyl groups and a benzene ring, such that during the polymerization, the gallic acid group of the polyphenol compound can form a resonance structure with the carboxyl group-containing monomer through de-localization and further stabilized the chemical structure of the carboxyl group-containing monomer. As such, the reaction rate of the polymerization can be lower, and the reactivity of the carboxyl group-containing monomer can be enhanced, thereby enhancing the level of polymerization of the formed superabsorbent polymer, and further reducing the extractable content as well as the extractables and the residual levels of the low-molecular-weight extractives in the obtained superabsorbent polymer.

It is noted that the polyphenol compound possesses an antioxidant property and an antibacterial property. Moreover, the gallic acid group of the polyphenol compound can further reduce the pH of the obtained superabsorbent polymer. Therefore, the obtained superabsorbent polymer can possess an antibacterial property by using the polyphenol compound.

In some embodiments, the polyphenol compound can have one to six gallic acid groups. In some embodiments, the polyphenol compound can selectively include at least one glycosyl group (with carbons of 5 or 6, for example), and at least one glycosyl group covalently bound to any one of the gallic acid groups. In some specific embodiments, the polyphenol compound with at least one glycosyl group can include but not limited to tannic acid, chebulinic acid, punicalagin, hamamelitannin, and/or corilagin.

In some embodiments, the polyphenol compound has at least one flavone group covalently bound to any one of the gallic acid groups. In some specific embodiments, the at least one flavone group can be flavanol, for example. In some specific embodiments, the at least one flavanol can be catechin, for example. In some specific embodiments, the polyphenol compound having the at least one flavone group can be epicatechin gallate, for example.

In some embodiments, the polyphenol compound can include but not limited to epigallocatechin gallate derivative, dimer, or polymer. In some embodiments, the polyphenol compound can include but not limited to a hexahydroxydiphenic acid that is an oxidative coupling derivative of the gallic acid group. In some specific embodiments, the polyphenol compound with the hexahydroxydiphenic acid can be punicalagin and/or corilagin, for example. In some embodiments, the polyphenol compound can include but not limited to ellagic acid that is formed by the lactonization of hexahydroxydiphenic acid. In some specific embodiments, the polyphenol compound including ellagic acid can be punicalagin, for example. In some embodiments, the polyphenol compound can include but not limited to digallic acid that is formed by the esterification of the gallic acid group. In some specific embodiments, the polyphenol compound including the digallic acid can be tannic acid, for example.

In some embodiments, based on the sum of the reaction composition as 100 weight percent, the use amount of the polyphenol compound is 0.001 weight percent to 5.000 weight percent. If the use amount of the polyphenol compound is too high, the reaction rate of the polymerization is too slow, and the obtained superabsorbent polymer becomes yellow easily, thereby adversely affecting the appearance. If the use amount of the polyphenol compound is too low, the carboxyl group-containing monomer cannot have a better level of polymerization and stability during polymerization.

It is noted that the polyphenol compound should be added to the reaction composition before the polymerization. If the polyphenol compound is added to the reaction composition after the polymerization, there is no polyphenol compound stabilizing the chemical structure of the carboxyl group-containing monomer during the polymerization, such that the reaction rate of the polymerization will be too high. Thus, the level of polymerization of the carboxyl group-containing monomer cannot be increased, and the extractable content as well as the extractables and the residual levels of the low-molecular-weight extractives in the obtained superabsorbent polymer cannot be decreased.

The crosslinking agent makes the obtained superabsorbent polymer have a proper degree of crosslinking and proper processability, thereby forming a hydrogel. The crosslinking agent can include but not limited to a compound with at least two unsaturated double bond groups, a compound with at least two epoxy groups, other suitable crosslinking agents, or any mixtures of the aforementioned compounds. In some specific examples, the compound with at least two unsaturated double bond groups can include but not limited to N,N'-bis(2-propenyl) amine, N,N'-methylene-bis(acrylamide), N,N'-methylene-bis(methacrylamide), allyl acrylate, ethylene glycol diacrylate, polyethylene glycol diacrylate, ethylene glycol dimethacrylate, poly ethylene glycol dimethacrylate, glycerol triacrylate, glycerol trimethacrylate, glycerol ethylene oxide triacrylate, glycerol ethylene oxide trimethacrylate, trimethylolpropane ethylene oxide triacrylate, trimethylolpropane ethylene oxide trimethacrylate, trimethylolpropane trimethacrylate, trimethylolpropane triacrylate, N,N,N-tris(2-propenyl)amine, ethyleneglycol diacrylate, polyoxyethylene triacrylate glycerol esters, triethylene polyoxyethylene glycerol triacrylate, and/or dipropylene triethylene glycol esters. In some specific embodiments, the compound with at least two unsaturated epoxy groups can include but not limited to sorbitol polyglycidyl ether, polypropylene glycol polyglycidyl ether, ethylene glycol diglycidyl ether, diethylene glycol diglycidyl alcohol ether, polyethylene glycol diglycidyl ether, and/or dipropylene glycol polyglycidyl ether.

Based on the use amount of the solid content of the superabsorbent polymer as 100 parts by weight, the use amount of the crosslinking agent can be 0.001 parts by weight to 5 parts by weight, e.g., 0.01 parts by weight to 3 parts by weight, for example, so that the obtained superabsorbent polymer has better retention capacity, absorption capacity, and the mechanical property, and thereby benefiting machining.

The initiator can include but not limited to a redox initiator, a thermal decomposition initiator, other proper initiator, or any mixture of the aforementioned material. In some specific embodiments, the redox initiator can include an acidic sulfite salt (e.g., sodium bisulfite), a thiosulfate salt, an ascorbic acid, or a ferrous salt. In some specific examples, the thermal decomposition initiator can include hydrogen peroxide, di-t-butyl peroxide, a peroxyamide, a persulfate (such as ammonium salt or alkali metal salt), and/or azo compound (e.g., 2,2'-azobis (2-amidinopropane) dihydrochloride salt, or 2.2'-azobis (N,N-dimethyleneisobutylamidine) dihydrochloride salt).

When the initiator includes the redox decomposition initiator and the thermal initiator at the same time, the redox initiator can decompose and generate free radicals, thereby initiating the first stage of polymerization. At the same time, the reaction heat generated in the first stage of the polymerization can make the thermal decomposition initiator decompose, thereby initiating the second stage of the polymerization, and increasing the rate of reactivity of the polymerization. Therefore, the polymerization can be performed at room temperature (e.g., 15°C to 40°C).

Based on the carboxyl group-containing monomer being neutralized as 100 weight percent, the use amount of the initiator can be 0.001 weight percent to 10 weight percent, e.g., 0.1 weight percent to 5 weight percent, for example. When the use amount of the initiator is in the aforementioned range, the polymerization can have a proper reactivity, so the obtained superabsorbent polymer has a proper level of polymerization, thereby forming a hydrogel.

Next, as shown in Operation 120 of the figure, polymerization is performed on the reaction composition, so as to obtain the superabsorbent polymer. As mentioned above, the initiator of the aforementioned reaction composition can produce free radicals, thereby initiating the subsequent polymerization. Therefore, the polymerization of the present invention belongs to a free-radical polymerization. **It** is noted that the aforementioned polymerization can be performed in a batch reactor or a conveyor belt reactor.

In some embodiments, after Operation 120, a pulverizing step can be selectively performed, so that the hydrogel is chopped into hydrogel pieces. In some embodiments, the pulverizing step can be performed with a cutting mill. In some specific embodiments, the diameter of the hydrogel pieces can be less than or equal to 2.0 mm, or 0.03 mm to 1.5 mm, for example. When the diameter is in the aforementioned range, the hydrogel pieces can have better thermal conductivity properties and higher amounts of fine powders, thereby benefitting the removal of the residual monomers and water content. Moreover, it can prevent the cost of the subsequent production processing from increasing. It is worth noting that the narrower the distributions of the diameters of the hydrogel pieces are, the better the efficiency of the drying step is, and the absorption capacity of the obtained superabsorbent polymer can be further increased.

In some embodiments, after Operation 120, a drying step can be selectively performed on the superabsorbent polymer, so that the water and residual monomers in the superabsorbent polymer can be effectively removed, and further enhance the absorption capacity of the superabsorbent polymer. In some embodiments, the temperature of the drying step can be 100°C to 180°C, for example, and the time of the drying step can be 1 hour to 3 hours, so as to control the crosslinking degree of the superabsorbent polymer. In some embodiments, the drying step is performed after the pulverizing step, so that the hydrogel pieces of the superabsorbent polymer forms dry matter.

In some embodiments, after Operation 120, the superabsorbent polymer can be selectively subjected to pulverization and screening. In some embodiments, the pulverization and the screening are performed on the obtained drying matter subjected to the drying step, so as to obtain a powder of the superabsorbent polymer. In some specific embodiments, the diameter of the powder of the superabsorbent polymer can be 0.06 mm to 1.00 mm, or 0.10 mm to 0.85 mm, for example, so as to achieve a better amount of fine powder and absorption capacity.

The superabsorbent polymer formed after Operation 120 has a uniform crosslinked bridging structure. In some embodiments, after Operation 120, a surface treatment can be selectively performed, so as to further bridge the surface of the superabsorbent polymer, thereby enhancing the absorption capacity of the superabsorbent polymer, the gel strength, the anti-caking property, and the permeability of the liquid.

The surface treating agent used in the surface treatment can include but not limited to a multifunctional crosslinking agent that can react to the carboxylic acid. In some embodiments, the surface treating agent can include but not limited to polyol, a polyamine, a compound having at least two epoxy groups, an alkylene carbonate, other suitable crosslinking agents, or any mixtures of the aforementioned materials. In some specific embodiments, the surface treating agent can include but not limited to glycerol, ethylene glycol, diethylene glycol, triethylene glycol, polyethylene glycol, propylene glycol, 1,4-butanediol, ethylenediamine, diethylenediamine, triethylenediamine, sorbitol polyglycidyl ether, polypropylene glycol polyglycidyl ether, ethylene glycol diglycidyl ether, diethylene glycol diglycidyl ether, polyethylene glycol diglycidyl ether, dipropylene glycol polyglycidyl ether, ethylene glycol carbonate, 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 1,3-dioxan-2-one or 4,6-dimethyl-1,3-dioxan-2-one, and/or 1,3-dioxepan-2-one.

Based on the superabsorbent polymer as 100 parts by weight, the use amount of the surface treating agent can be 0.001 parts by weight to 10 parts by weight, preferably 0.005 parts by weight to 5 parts by weight, for example, so as to reach a proper level of surface treatment and enhance the absorption capacity of the superabsorbent polymer.

Based on the form of the surface treating agent, the surface treating agent can be added to the superabsorbent polymer directly or after being prepared into a crosslinking solution at first. The aforementioned crosslinking solution can include but not limited to water and/or a hydrophilic organic solvent. In some specific embodiments, the hydrophilic organic solvent can be methanol, ethanol, propanol, isobutanol, acetone, methyl ether, and/or ethyl ether, for example. In some embodiments, the surface treatment can be performed at 100°C to 200°C for 0.5 hours to 1.5 hours, so as to reach a better bridging effect.

In some embodiments, after the surface treatment, an aluminum sulfate water solution can be selectively added, thereby preventing the superabsorbent polymer from absorbing moisture in the air and caking during the processing. In the aforementioned embodiment, the concentration of the aluminum sulfate water solution can be 20 weight volume percentage to 30 weight volume percentage, for example. Moreover, based on the weight of the superabsorbent polymer is 100 parts by weight, the use amount of the aluminum sulfate water solution can be 1.5 parts by weight to 3.0 parts by weight, for example. In the aforementioned embodiment, after adding the aluminum sulfate water solution, the superabsorbent polymer can selectively be heat-treated at 100°C to 200°C for 0.5 to 1.5 hours.

As proven by experiments, the RAA of the superabsorbent polymer obtained by using the polyphenol compound can be 250 ppm to 400 ppm, for example, indicating that the polyphenol compound can enhance the level of polymerization of the carboxyl group-containing monomer. Moreover, the superabsorbent polymer obtained by using the polyphenol compound can have an extractable of the low-molecular-weight extractives of less than or equal to 1.5 weight percent, for example, and a residual level of the low-molecular-weight extractives can be less than 0.15 weight percent, and even less than 0.10 weight percent, indicating that the polyphenol compound can enhance the stability of the chemical structure of the carboxyl group-containing monomer during polymerization. Therefore, the obtained superabsorbent polymer is safe. In addition, after the superabsorbent polymer contacts microbes, the number of viable microbes can be reduced, indicating that the superabsorbent polymer has an antibacterial property.

As proven by experiments, the AAP of the aforementioned superabsorbent polymer can be 20 g/g to 30 g/g, for example, and the FSC can be more than 60 g/g, for example, indicating that the obtained superabsorbent polymer can maintain excellent retention capacity and absorption capacity by adding the polyphenol compound.

As mentioned above, the superabsorbent polymer is safe and can therefore be applied as a foodstuff packaging material. In some embodiments, the superabsorbent polymer can be deposed on a polyethylene membrane directly, and on the absorbent, a nonwoven fabric can be deposed. In these application examples, the superabsorbent polymer paved between the polyethylene membrane and the nonwoven fabric is not tightly stacked, so there is a space for the superabsorbent polymer to expand, thereby enhancing the amount of water that can be absorbed.

In some embodiments, superabsorbent polymer can selectively be mixed with fiber substrates to form an absorbent. In some embodiments, the absorbent can be deposed on the impermeable polyethylene membrane, and the permeable nonwoven fabric is deposed on the absorbent, so as to form a structure with laminar composites.

In some embodiments, the fiber substrates can include a hydrophilic fiber, so as to benefit the diffusion and transmission of liquid, thereby enhancing the absorption capacity of the absorbent. In some specific examples, the hydrophilic fiber can include but not limited to pulverized wood pulp, crosslinked cellulose, cotton, wool, and/or vinyl acetate fiber.

Normally, the basis weight (weight of a unit of area) of the absorbent can be 0.01 g/cm² to 0.30 g/cm², and the thickness of the absorber is not more than 30 mm. In some embodiments, based on the weight of the absorber as 100 weight percent, the weight of the superabsorbent polymer can be less than or equal to 20 weight percent, or less than or equal to 10 weight percent, for example.

### Preparation Example 1

In a 2 L-Erlenmeyer flask containing 540 g acrylic acid and 583.2 g water, 437.5 g sodium hydroxide water solution of 48 weight percent was slowly added, so as to perform a neutralizing step, thereby obtaining an acrylic acid water solution with a concentration of 42 weight percent, and 70 mole percent of the acrylic acid formed sodium acrylate. The adding ratio of the sodium hydroxide to the acrylic acid was 0.85 to 0.95, the neutralizing step was performed for 2 hours, and the temperature of the Erlenmeyer flask was maintained at a range of 15°C to 40°C.

Next, 13.8 g tannic acid and 0.9 g N,N'-methylene-bis(acrylamide) were added to the Erlenmeyer flask, and the temperature in the Erlenmeyer flask was maintained at 20°C. Then, 0.3 g hydrogen peroxide, 3.6 g sodium bisulfite, and 3.6 g ammonium persulfate initiator were added to the Erlenmeyer flask, so as to perform a polymerization, thereby obtaining the hydrogel of the superabsorbent polymer. The hydrogel was chopped by a cutting mill and screened for hydrogel pieces having particle sizes less than or equal to 2.0 mm. Then, a drying step was performed on the hydrogel pieces at 130°C for 2 hours, so as to obtain a drying matter. Subsequently, the drying matter was screened by using a sieve with a pore size of 0.10 mm to 0.85 mm, so as to obtain powders of the superabsorbent polymer.

The 200 g powders of the superabsorbent polymer of Preparation Example 1 are mixed with 5 g surface treating agent solution, followed by a heat treatment of 150°C for 1 hour and a cooling treatment, thereby obtaining the surface-treated superabsorbent polymer. The aforementioned surface-treated agent solution was mixed with ethylene glycol, 1,4-butanediol (manufactured by FORMOSA PLASTICS CORPORATION), and methanol in a volume ratio of 1:1:0.5.

### Preparation Example 2

The method of making the surface-treated superabsorbent polymer of Preparation Example 2 was the same as that of Preparation Example 1. The difference was that in the method of Preparation Example 2, the 0.9 g N,N'-methylene-bis(acrylamide) was replaced with 1.1 g polyethylene glycol diacrylate having a molecular weight of 626. The surface-treated superabsorbent polymer of Preparation Example 2 was further treated with an aluminum sulfate treatment that was briefly described below: 100 g of the surface-treated superabsorbent polymer of Preparation Example 2 was mixed with 2.1 g aluminum sulfate water solution of 27.5 weight percent and heated at 150°C for 30 minutes.

### Preparation Examples 3 to 8

The methods of making the surface-treated superabsorbent polymer of Preparation Examples 3 to 6 were similar to that of Preparation Example 1. The differences were that the adding amount of the tannic acid in Preparation Example 3 was adjusted to 27.6 g. The adding amount of the tannic acid in Preparation Example 4 was adjusted to 11.0 g. In Preparation Example 5, tannic acid was replaced with 3.6 g epicatechin gallate. In Preparation Example 6, the tannic acid was replaced with 6.2 g epicatechin gallate. The methods of making the surface-treated superabsorbent polymer of Preparation Examples 7 and 8 were similar to that of Preparation Example 2. The differences were that the adding amount of the tannic acid in Preparation Example 7 was adjusted to 11.1 g, and the adding amount of the tannic acid in Preparation Example 8 was adjusted to 20.6 g.

### Comparative Preparation Examples 1 to 3

The method of making the surface-treated superabsorbent polymer of Comparative Preparation Example 1 was similar to that of Preparation Example 1. The difference was that tannic acid was not added in Comparative Preparation Example 1. The method of making the surface-treated superabsorbent polymer of Comparative Preparation Example 2 was similar to that of Preparation Example 2. The difference was that the tannic acid was not added in Comparative Preparation Example 2. The method of making the surface-treated superabsorbent polymer of Comparative Preparation Example 3 was similar to that of Comparative Preparation Example 2. The difference was that in Comparative Preparation Example 3, a mixed solution of ethylene glycol diglycidyl ether (EX810, made by NAGASE & CO., LTD.), ethylene glycol, and water with a volume ratio of 1:2:2 was used as the surface treating agent. After adding the surface treating agent, a heating treatment was performed at 130°C for 30 minutes.

### Comparative Preparation Examples 4 and 5

The surface-treated superabsorbent polymer of Comparative Preparation Examples 4 and 5 were commercial superabsorbent polymers (manufactured by FORMOSA PLASTICS CORPORATION). In Preparation Example 4, the commercial superabsorbent polymer with the product name BC283FHA had the properties of anti-caking and anti-bacteria. In Preparation Example 5, the commercial superabsorbent polymer with the product name BC683AN had deodorizing and anti-bacterial properties.

### Evaluation method and result

To show the properties of the superabsorbent polymer of the present invention, the physical properties were analyzed with the following evaluation method. Unless otherwise specified, the evaluation methods were performed at room temperature (e.g. 23±2°C) and in an environment with a relative air humidity of 45±10%. The superabsorbent polymer was uniformly mixed before being evaluated.

### Absorption against pressure (AAP)

The absorption against the pressure of the surface-treated superabsorbent polymer was evaluated according to the measurement method of ERT 442.3(10) regulated by the European Disposables and Nonwovens Association (EDANA), which was briefly described hereafter. The initial weight of the surface-treated superabsorbent polymer was measured, and a pressure of 4.9 kPa was exerted on the surface-treated superabsorbent polymer. Then, the surface-treated superabsorbent polymer was soaked in 0.9 weight percent of sodium chloride aqueous solution for 60 minutes. Then, the weight of the surface-treated superabsorbent polymer after soaking was measured. The absorption against pressure was obtained by dividing the weight after soaking by the initial weight.

### Saline-free swell capacity (FSC)

The saline-free swell capacity of the superabsorbent polymer subjected to the surface treatment was evaluated according to the measurement method of ERT 441.3(10) regulated by EDANA, which was briefly described herein. The weight of the saline absorbed by the surface-treated superabsorbent polymer was measured after 0.1 g surface-treated superabsorbent polymer was soaked in 400 mL saline of 0.2% *(w*/*w)* for 24 hours. Then, the ratio of the weight of the saline absorbed by the surface-treated superabsorbent polymer to the weight of the surface-treated superabsorbent polymer not soaked in saline (i.e., 0.1 g) was calculated to obtain FSC (unit: g/g).

### Amount of residual acrylic acid (RAA)

The amount of the residual monomers (RM), or so-called the amount of the residual acrylic acid (RAA), was evaluated according to the measurement method of ERT 410.3(10) regulated by EDANA.

### Amounts of extractable contents

The amounts of the surface-treated superabsorbent polymer were measured according to the measurement method of ERT 470.3(10) regulated by EDANA, in which the amounts of the extractable contents were obtained by having the superabsorbent polymer soaked in sodium chloride water solution for 24 hours, followed by the measurement of the potentiometric titration and calculation.

### Extractables and residual levels of low-molecular-weight extractives

The extractable contents of the low-molecular-weight extractives in the surface-treated superabsorbent polymer were evaluated according to §21 177.1211 of the Code of Federal Regulations Title (CFR) regulated by the U.S. Food and Drug Administration (FDA), which was briefly described herein. A tea bag sample was obtained by using a 4 inches×6 inches tea bag to contain the superabsorbent polymer. The tea bag sample was soaked in a sodium chloride water solution of 0.2 weight volume percentage under an applied pressure of 0.15 pounds per square inch (psi) to extract the tea bag sample for 24 hours at 20°C. The ratio of the volume of the sodium chloride aqueous solution to the surface-treated superabsorbent polymer in the tea bag sample was at least 60 mL:1 g to obtain an extract solution.

The extract solution was filtered by the No. 1 qualitative filter paper, and 20 mL of the obtained filtrate was placed on a petri dish, followed by a drying step performed at 80°C for 120 minutes to obtain a sample to be tested. 10 mg sample to be tested was added to a 1 mL mobile phase (0.2 M NaNO₃ and 0.01 M Na₂HPO₄) to obtain an injection sample. Then, the injection sample was analyzed by gel permeation chromatography to obtain the weight-average molecular weight (Mw) of the sample to be tested.

Then, the data analyzing function of the analyze software DataApex Clarity VA was used to calculate the percentage of the area under the curve less than 1000 g/mol to the total area under the curve, so as to obtain the extractable of the low-molecular-weight extractives. Moreover, the residual level of the low-molecular-weight extractives was obtained by the weight percentage of the product of the molecular weights of the content corresponding to the peak of the curve smaller than 1000 g/mol (numerator) and the area under the curve over the superabsorbent polymer (denominator).

### Antibacterial property

An antibacterial standard test was performed according to AATCC TM100 regulated by The American Association of Textile Chemists and Colorists (AATCC) to evaluate the antibacterial property of the surface-treated superabsorbent polymer against Gram-positive bacteria *(Staphylococcus aureus)* and Gram-negative bacteria (*Escherichia coli*)*.* The method was briefly described herein. A blank test sample was subjected to absorb 1 mL bacterial solution in a wide-mouth bottle, 100 mL neutralized solution was added into the wide-mouth bottle, and the wide-mouth bottle was shaken vigorously (i.e., by an oscillator). The obtained washing-out solution was spread on a comparative petri dish. The bacterial solution included 1×10⁵ colony forming unit (CFU)/mL to 3×10⁵ CFU/mL bacteria (*Staphylococcus aureus* or *Escherichia coli*)*.*

Next, an experimental test sample made by the surface-treated superabsorbent polymer was subjected to absorb the bacterial solution and then placed in a wide-mouth bottle for incubation at 37°C for 24 hours. Then, with the aforementioned method, the washed-out solution was obtained and spread on an experimental petri dish.

The comparative petri dish and the experimental petri dish were placed in an incubator to perform incubation to obtain colonies. The numbers of the colonies on the comparative petri dish and the experimental petri dish were counted to obtain a first bacterial amount of the blank test sample contacting the bacterial solution for 0 hours as well as the second bacterial amount of the experimental test sample contacting the bacterial solution for 24 hours. The percentage of the difference of the first bacterial amount and the second bacterial amount to the second bacterial amount was calculated to obtain a bacterial reduction rate (R-value). According to the R-value, the antibacterial property of the superabsorbent polymer could be divided to 4 grades. Grade 1 represented an R-value of negative or 0%, i.e., the superabsorbent polymer had no antibacterial property. Grade 2 represented an R-value of more than 0% to 30%, i.e., the superabsorbent polymer had little antibacterial property. Grade 3 represented an R-value of more than 30% to 60%, i.e., the superabsorbent polymer had an antibacterial property. Grade 4 represented an R-value of more than 60%, i.e., the superabsorbent polymer had an excellent antibacterial property.

Table 1 lists the types and amounts of polyphenol compound, the crosslinking agent, whether being subjected to aluminum sulfate treatment (× represented not subjected to aluminum sulfate treatment, o represented subjected to aluminum sulfate treatment), the AAP, the FSC, the RAA, the amounts of extractable contents, the extractables and the residual levels of the low-molecular-weight extractives, the anti-bacterial property of the superabsorbent polymer subjected to the surface treatment of Preparation Examples 1 to 8 and Comparative Preparation Examples 1 to 5.

**Table 1**

| Examples | | Polyphenol compound (B) | | Crosslinking agent (C) | | Aluminum sulfate treatment | AAP (g/g) | FSC (g/g) | RAA (ppm) | Amount of extractable component (%) | Extractives with low molecular weights | | Antibacterial property | |
|---|---|---|---|---|---|---|---|---|---|---|---|---|---|---|
| | | Type | Amount (g) | Type | Amount (9) | | | | | | Extractables (%) | Residual level (%) | Bacteria | |
| | | | | | | | | | | | | | 1 | 2 |
| Preparation Examples | 1 | B-1 | 13.8 | C-1 | 0.9 | × | 21.7 | 63.6 | 298 | 6.9 | 0.79 | 0.055 | 3 | 3 |
| | 2 | B-1 | 13.8 | C-2 | 1.1 | ∘ | 22.1 | 61.3 | 364 | 7.2 | 0.86 | 0.062 | 3 | 3 |
| | 3 | B-1 | 27.6 | C-1 | 0.9 | × | 21.6 | 64.5 | 327 | 6.3 | 0.71 | 0.045 | 4 | 4 |
| | 4 | B-1 | 11.0 | C-1 | 0.9 | × | 21.5 | 62.9 | 311 | 7.3 | 0.80 | 0.058 | 3 | 4 |
| | 5 | B-2 | 3.6 | C-1 | 0.9 | × | 20.4 | 62.3 | 371 | 8.6 | 0.92 | 0.077 | 4 | 3 |
| | 6 | B-2 | 6.2 | C-1 | 0.9 | × | 20.7 | 62.5 | 396 | 7.9 | 0.83 | 0.066 | 3 | 3 |
| | 7 | B-1 | 11.1 | C-2 | 1.1 | ∘ | 21.8 | 62.2 | 347 | 7.1 | 0.84 | 0.060 | 3 | 3 |
| | 8 | B-1 | 20.6 | C-2 | 1.1 | ∘ | 21.8 | 63.1 | 377 | 6.4 | 0.77 | 0.049 | 4 | 4 |
| Comparative Preparation Examples | 1 | Not added | | C-1 | 0.9 | × | 22.8 | 58.5 | 344 | 15.1 | 2.26 | 0.341 | 1 | 1 |
| | 2 | Not added | | C-2 | 1.1 | ∘ | 24.0 | 56.4 | 421 | 14.1 | 2.13 | 0.300 | 1 | 1 |
| | 3 | Not added | | C-2 | 1.1 | ∘ | 21.8 | 55.4 | 406 | 19.0 | 3.31 | 0.629 | 1 | 1 |
| | 4 | BC283FHA | | | | | 10.6 | 62.7 | 275 | 28.1 | 4.22 | 1.186 | 4 | 4 |
| | 5 | BC683AN | | | | | 15.7 | 56.2 | 236 | 18.9 | 2.11 | 0.399 | 4 | 4 |
| B-1: Tannic acid; B-2: Epicatechin gallate | | | | | | | | | | | | | | |
| C-1: N,N'-methylene-bis(acrylamide); C-2: polyethylene glycol diacrylate | | | | | | | | | | | | | | |
| Bacteria *1: Staphylococcus aureus ;* Bacteria 2: *Escherichia coli* | | | | | | | | | | | | | | |

As shown in Table 1, the AAP of Preparation Examples 1 to 8 and Comparative Preparation Examples 1 to 3 were in the range of 20.0 g/g to 25.0 g/g, indicating that the surface-treated superabsorbent polymer obtained by adding the polyphenol compound had excellent retention capacity.

Moreover, the FSC of Preparation Examples 1 to 8 could be more than 60 g/g, but the FSC of Comparative Preparation Examples 1 to 3 were less than 60 g/g, indicating that the addition of polyphenol compound could further enhance the absorption capacity of the obtained surface-treated superabsorbent polymer.

In addition, there was no significant difference between the RAA of Preparation Examples 1 to 8 from Comparative Preparation Examples 1 to 5, indicating the surface-treated superabsorbent polymer obtained by adding polyphenol compound had a high level of polymerization.

Compared to the surface-treated superabsorbent polymer of Comparative Preparation Examples 1 to 4 not adding polyphenol compound, the surface-treated superabsorbent polymer of Preparation Examples 1 to 8 obtained by adding polyphenol compound had lower amounts of the extractable content, lower extractables and lower residual levels of the low-molecular-weight extractives, indicating the addition of the polyphenol compound could enhance the stability of the chemical structure of the carboxyl group-containing monomer during polymerization, thereby ensuring that the superabsorbent polymer was safe to be used as a foodstuff packaging material.

It is noted that the polyphenol compound added to Preparation Examples 1 to 8 included the gallic acid group so that the obtained superabsorbent polymer had an antibacterial property. Comparative Preparation Examples 1 to 3 did not obtain the polyphenol compound, so the obtained superabsorbent polymer did not have an antibacterial property.

In addition, there was no significant difference between the FSC, the AAP, the RAA, the amount of extractable content, the extractables, and the residual levels of the low-molecular-weight extractives as well as the antibacterial property of the obtained superabsorbent polymers of the Preparation Examples 1 to 2 using the same type and amount of the polyphenol compound but different crosslinking agents. It could be concluded that the type of the crosslinking agent did not affect the retention capacity and the absorption capacity, the level of polymerization, and the stability during polymerization as well as the antibacterial property of the obtained superabsorbent polymer.

It can be known from the aforementioned embodiment that a superabsorbent polymer, the method of making the same, and the foodstuff packaging material including the same of the present invention have the advantages of the addition of polyphenol compound so the superabsorbent polymer can not only maintain the retention capacity and the absorption capacity but also have a high level of polymerization and stability during the polymerization. Therefore, the superabsorbent polymer can have an antibacterial property, a low amount of extractable content, a low extractable, and a low residual level of the low-molecular-weight extractives. Therefore, the superabsorbent polymer can be used as a foodstuff packaging material.

## Claims

1. A superabsorbent polymer, **characterized by** comprising:
a carboxyl group-containing monomer water solution, wherein a neutralization ratio of the carboxyl group-containing monomer water solution is 45 mole percent to 80 mole percent, and a concentration of the carboxyl group-containing monomer water solution is 20 weight percent to 55 weight percent;
a polyphenol compound, having at least one gallic acid group;
a crosslinking agent; and
an initiator, comprising a redox initiator and/or a thermal decomposition initiator.

2. The superabsorbent polymer of claim 1, **characterized in that** the polyphenol compound has one to six gallic acid groups.

3. The superabsorbent polymer of claim 2, **characterized in that** the polyphenol compound has at least one glycosyl group, the at least one glycosyl group has 5 to 6 carbons, and the at least one glycosyl group is covalently bound to one of the gallic acid groups.

4. The superabsorbent polymer of claims 2 or 3, **characterized in that** the polyphenol compound has at least one of a flavone group, and the at least one of the flavone group is covalently bound to one of the gallic acid groups.

5. The superabsorbent polymer of any one of claims 1 to 4, **characterized in that** the polyphenol compound comprises an ellagic acid.

6. The superabsorbent polymer of any one of claims 1 to 5, **characterized in that** the polyphenol compound comprises a digallic acid.

7. The superabsorbent polymer of any one of claims 1 to 6, **characterized in that** the polyphenol compound comprises a hexahydroxydiphenic acid.

8. The superabsorbent polymer of claim 1, **characterized in that** the polyphenol compound is selected from the group consisting of tannic acid, chebulinic acid, punicalagin, epicatechin gallate, hamamelitannin, corilagin, and any combination thereof.

9. A foodstuff packaging material, **characterized by** comprising a superabsorbent polymer of any one of claims 1 to 8, wherein according to an evaluation method recited in Code of Federal Regulations Title 21 Part 117 subpart B section 177.1211 regulated by the U.S. Food and Drug Administration (FDA), extractables of low-molecular-weight extractives in the superabsorbent polymer in 24 hours are less than 1.5%.

10. A method of making a superabsorbent polymer, **characterized by** comprising:
providing a reaction composition, wherein the reaction composition comprises:
a carboxyl group-containing monomer water solution, wherein a neutralization ratio of the carboxyl group-containing monomer water solution is 45 mole percent to 80 mole percent, a concentration of the carboxyl group-containing monomer water solution is 20 weight percent to 55 weight percent;
a polyphenol compound, having at least one gallic acid group;
a crosslinking agent; and
an initiator, including a redox initiator and/or a thermal decomposition initiator; and
performing a polymerization on the reaction composition, thereby obtaining the superabsorbent polymer.

11. The method of making the superabsorbent polymer of claim 10, **characterized in that** the polyphenol compound has one to six gallic acid groups.

12. The method of making the superabsorbent polymer of claim 11, **characterized in that** the polyphenol compound has at least one glycosyl group, the at least one glycosyl group has 5 to 6 carbons, and the at least one glycosyl group is covalently bound to one of the gallic acid groups.

13. The method of making the superabsorbent polymer of claims 11 or 12, **characterized in that** the polyphenol compound has at least one of a flavone group, and the at least one of the flavone group is covalently bound to one of the gallic acid groups.

14. The method of making the superabsorbent polymer of any one of claims 10-13, **characterized in that** the polyphenol compound comprises an ellagic acid.

15. The method of making the superabsorbent polymer of any one of claims 10-14, **characterized in that** the polyphenol compound comprises a digallic acid.

16. The method of making the superabsorbent polymer of any one of claims 10-15, **characterized in that** the polyphenol compound comprises a hexahydroxydiphenic acid.

17. The method of making the superabsorbent polymer of claim 10, **characterized in that** the polyphenol compound is selected from the group consisting of tannic acid, chebulinic acid, punicalagin, epicatechin gallate, hamamelitannin, corilagin, and any combination thereof.
